# EUROPÄISCHE PATENTSCHRIFT

(11) **EP 3 578 861 B1**
(45) Veröffentlichungstag und Bekanntmachung des Hinweises auf die Patenterteilung: **31.05.2023**
(21) Anmeldenummer: 19163657.0
(22) Anmeldetag: 19.03.2019
(51) Int. Cl.: F16L 5/02, F16L 27/12, F16L 3/01, B60R 16/02, H02G 3/22, H02G 11/00

(54) **LEITUNGSFÜHRUNG ZUM FÜHREN MINDESTENS EINES LEITUNGSSTRANGS ZWISCHEN ZWEI ELEMENTEN**
CONDUIT FOR GUIDING AT LEAST ONE STRAND BETWEEN TWO ELEMENTS
GUIDAGE DE CONDUITE PERMETTANT DE GUIDER AU MOINS UN FAISCEAU DE CONDUITES ENTRE DEUX ÉLÉMENTS

(30) Priorität: 04.06.2018 DE 102018113248
(43) Veröffentlichungstag der Anmeldung: 11.12.2019
(73) Patentinhaber: Binder GmbH, 78532 Tuttlingen (DE)
(72) Erfinder: Hafner, Rainer, 88637 Leibertingen (DE); Efinger, Patrick, 78554 Aldingen-Aixheim (DE); Bollaender, Jochen, 78647 Trossingen (DE)
(74) Vertreter: Westphal, Mussgnug & Partner Patentanwälte mbB

(56) Entgegenhaltungen:
- EP-A1- 1 157 894
- WO-A1-2012/111182
- DE-A1- 10 355 271
- DE-U- 6 903 983
- US-A- 3 907 334
- US-A1- 2005 012 333
- US-A1- 2006 001 261
- US-B1- 9 660 427

## Beschreibung

Die Erfindung betrifft eine Leitungsführung zum Führen mindestens eines Leitungsstrangs zwischen zwei Elementen.

Derartige Leitungsführungen werden verwendet, um Leitungsstränge, bestehend aus mindestens einer Leitung wie zum Beispiel einem Kabel oder Schlauch, zwischen zwei insbesondere relativ zueinander bewegbaren Elementen zu führen. Häufig handelt es sich dabei um relativ zueinander bewegbare Elemente einer Vorrichtung, insbesondere eines Fahrzeugs, beispielsweise um ein Tür und das Gehäuse beziehungsweise die Karosserie. Wesentliche Aspekte beim Einsatz einer Leitungsführung sind der Schutz des geführten Leitungsstrangs vor Knicken und Klemmen sowie vor äußeren Einflüssen.

Aus dem Stand der Technik sind verschiedene Leitungsführungen bekannt. So offenbart EP 1 157 894 A1 eine einstückig ausgeführte Leitungsführung, bei der zwischen zwei Anschlusselementen ein Faltenbalg angeordnet ist. Eines der Anschlusselemente weist dabei ein Führungselement auf, das eine Umlenkung der Leitung am Ende der Leitungsführung ermöglicht.

Als weiterer Stand der Technik werden die WO 2012/111 182 A1, die US 9 660 427 B1, die US 3 907 334 A, die DE 69 03 983 U, die US 2005/012 333 A1 und die US 2006/0 001 261 A1 genannt.

DE 103 55 271 A1 zeigt ebenfalls eine Leitungsführung in Form eines Faltenbalgs, dessen Enden jeweils an den beiden relativ zueinander bewegbaren Elementen befestigbar sind. Außerdem sieht dieses Dokument Mittel zur Verringerung der Reibung zwischen Faltenbalg und der darin geführten Leitung, beispielsweise in Form einer zusätzlichen Ummantelung der Leitung, vor.

Derartige Leitungsführungen sind sehr flexibel. Der den Abstand zwischen den beiden relativ zueinander bewegbaren Elementen überbrückende Teil befindet sich jedoch stets in dem Zwischenraum zwischen den beiden Elementen. Insbesondere in Situationen, in denen die beiden Elemente relativ nah aneinander stehen, weisen derartige Leitungsführungen einen nachteilig hohen Raumbedarf zwischen den beiden relativ zueinander bewegbaren Elementen auf.

Der Erfindung liegt daher die Aufgabe zugrunde, eine raumsparende Leitungsführung bereitzustellen.

Die Aufgabe wird erfindungsgemäß gelöst durch eine Leitungsführung mit den Merkmalen des Patentanspruchs 1.

Vorteilhafte Ausgestaltungen und Weiterbildungen der Erfindung sind in den abhängigen Ansprüchen angegeben.

Die erfindungsgemäße Leitungsführung zeichnet sich dadurch aus, dass sie zur Führung mindestens eines Leitungsstrangs zwischen einem ersten Element und einem zweiten Element ein Einschubteil aufweist, das ein rohrförmiges Führungselement aufweist und an dem ersten Element angeordnet werden kann. Darüber hinaus weist eine solche Leitungsführung ein rohrförmiges Aufnahmeteil auf, das an dem zweiten Element angeordnet werden kann. Das rohrförmige Führungselement sowie das rohrförmige Aufnahmeteil müssen dabei nicht zwangsweise einen kreisförmigen Querschnitt aufweisen. Außerdem kann insbesondere die Länge des rohrförmigen Aufnahmeteils deutlich kleiner als sein Durchmesser sein.

Erfindungsgemäß ist das Führungselement des Einschubteils in dem Aufnahmeteil axial bewegbar angeordnet. Der Leitungsstrang ist dabei vorzugsweise im Einschubteil angeordnet, wobei das Führungselement das Teil des Einschubteils ist, das den Leitungsstrang zwischen dem ersten Element und dem zweiten Element führt. Bei dem ersten Element und dem zweiten Element kann es sich insbesondere um zwei permanent oder nur zeitweise relativ zueinander bewegbare Elemente einer Vorrichtung handeln. Bewegen sich das erste Element und das zweite Element aufeinander zu, wird vorzugsweise das Einschubteil in das Aufnahmeteil eingeschoben.

Ebenfalls ist eine Anordnung der Leitungsführung zwischen zwei Elementen denkbar, die sich nur selten oder gar nicht relativ zueinander bewegen. Beispielhaft seien zwei Elemente einer Anlage genannt die sich im endgültigen Aufbauzustand der Anlage an feststehenden Positionen befinden und zwischen denen lediglich in Montagesituationen eine Relativbewegung stattfindet. Bei derartigen Anwendungen wird vor allem die Eigenschaft der Leitungsführung genutzt, dass durch die axiale Bewegbarkeit des Einschubteils im Aufnahmeteil linear-axialer Versatz zwischen dem ersten und dem zweiten Element ausgeglichen werden kann und dabei der Schutz des Leitungsstrangs gewährleistet ist.

Gemäß der Erfindung besteht das Einschubteil und das Aufnahmeteil aus einem Elastomer, besonders bevorzugt aus Polyurethan. Durch den Einsatz eines elastischen, vorzugsweise gummiartigen Materials, kann bei der Relativbewegung zwischen dem Einschubteil und dem Aufnahmeteil neben dem linear-axialen Versatz auch auftretender Versatz radialer, winkliger oder rotatorischer Art durch rein elastische Verformung insbesondere des Führungselements ausgeglichen werden. Damit erweitert sich der Einsatzbereich einer erfindungsgemäßen Leitungsführung auf Anwendungen, in denen das Einschubteil und das Aufnahmeteil sich nicht rein linear-axial zueinander bewegen. Beispielhaft sei eine Anordnung genannt, bei der das zweite Element eine Vorrichtung und das erste Element eine Tür der Vorrichtung darstellt, die durch ein Scharnier verbunden sind.

Um den nötigen Kraftaufwand und die Beanspruchung der an der Verformung beteiligten Bauteile so gering wie möglich zu halten, kann das Verformungsverhalten der Leitungsführung zusätzlich begünstigt werden, indem die Geometrie der Leitungsführung so ausgestaltet ist, dass ihr Widerstandsmoment hinsichtlich der bevorzugten Verformungsrichtung minimiert wird.

Gemäß der Erfindung weisen sowohl das Einschubteil als auch das Aufnahmeteil mindestens ein Flanschelement auf. Vor allem, wenn das erste Element und/oder das zweite Element eine Bohrung oder ein Aussparung zur Aufnahme des Einschubteils beziehungsweise des Aufnahmeteils vorsehen, kann für deren Anordnung in dem ersten Element beziehungsweise dem zweiten Element die Existenz eines Flanschelements besonders vorteilhaft sein. In diesem Fall ist das Flanschelement besonders bevorzugt so ausgestaltet, dass zwischen dem Flanschelement und dem ersten Element beziehungsweise dem zweiten Element eine Passung entsteht, die einen stabilen Sitz der Leitungsführung sowie eine Dichtwirkung realisiert, die den ungewollten Durchtritt von beispielsweise Gasen, Flüssigkeiten oder Schmutz verhindert. Für beide Funktionen kann es vorteilhaft sein, wenn das Flanschelement aus einem Elastomer wie zum Beispiel Polyurethan besteht.

Zur gleichzeitigen Anordnung des Einschubelements oder des Aufnahmeelements an mehreren Teilen des ersten Elements beziehungsweise des zweiten Elements, beispielsweise an mehreren hintereinander liegenden Wandungen, kann das Einschubteil beziehungsweise das Aufnahmeteil mehrere Flanschelemente aufweisen.

Das Flanschelement ist so ausgestaltet, dass es ein inneres Anlageelement und ein äußeres Anlageelement aufweist. Das innere Anlageelement und das äußere Anlageelement können so angeordnet sein, dass zwischen ihnen eine Wandung des ersten Elements beziehungsweise des zweiten Elements angeordnet werden kann. Besonders bevorzugt legen sich dabei das innere Anlageelement beziehungsweise das äußere Anlageelement passgenau an die Wandung an, wodurch sowohl die Stabilität der Leitungsführung als auch die Dichtwirkung des Flanschelements verbessert werden kann. Für die Dichtwirkung kann es außerdem vorteilhaft sein, wenn das innere Anlageelement beziehungsweise das äußere Anlageelement aus einem Elastomer, wie zum Beispiel Polyurethan, bestehen.

Vorzugsweise weist das Aufnahmeteil mindestens eine Aufnahmetülle auf. Die Aufnahmetülle kann am inneren Anlageelement und/oder am äußeren Anlageelement des Flanschelements angeordnet sein. Durch die Anordnung mindestens einer Aufnahmetülle wird insbesondere die Steifigkeit des Aufnahmeteils erhöht. Gemäß einer besonders bevorzugten Ausführungsform der Erfindung stehen ein Innendurchmesser des Aufnahmeteils und ein Außendurchmesser des Führungselements miteinander in einem linienförmigen oder flächigen Kontakt. Ein flächiger Kontakt zwischen Aufnahmeteil und Führungselement kann vergrößert werden, indem das Aufnahmeteil eine oder mehrere Aufnahmetüllen aufweist, die zumindest einen Teil des mit dem Führungselement in Kontakt stehenden Teils des Aufnahmeelements bilden. Wird der flächige Kontakt zum Beispiel durch eine oder mehrere Aufnahmetüllen vergrößert, kann dadurch die Steifigkeit und damit die Stabilität der gesamten Leitungsführung vergrößert werden. Dies kann insbesondere von Vorteil sein, wenn durch das Führungselement ein Versatz ausgeglichen wird. Darüber hinaus kann der Kontakt eine Dichtfunktion erfüllen, wodurch der ungewollte Durchtritt von beispielsweise Gasen, Flüssigkeiten oder Schmutz insbesondere zwischen dem zweiten Element und der Umwelt verhindert werden kann.

Gemäß einer Weiterbildung der Erfindung kann das Aufnahmeteil im Bereich des Kontakts auf der dem Führungselement zugewandten Seite zumindest abschnittsweise eine Riffelung aufweisen. Diese Riffelung kann insbesondere der Verminderung der Reibung zwischen Aufnahmeteil und Führungselement dienen.

Gemäß einer besonders bevorzugten Ausführungsform der Erfindung weist das Einschubteil ein durch das Aufnahmeteil hindurchgreifendes Ende auf. Dieses hindurchgreifende Ende kann sich insbesondere in das Innere des zweiten Elements erstrecken. Dadurch kann die Länge des Einschubteils, insbesondere des Führungselements, unabhängig von der Länge des Aufnahmeteils gewählt werden.

Um bei Relativbewegungen zwischen dem ersten Element und dem zweiten Element, die einen großen Verfahrweg zwischen dem Einschubteil und dem Aufnahmeteil zur Folge haben, ein Herausgleiten des Führungselements aus dem Aufnahmeteil zu verhindern, weist das Einschubteil in einer Weiterbildung der Erfindung am durch das Aufnahmeteil hindurchgreifenden Ende ein Sperrelement auf. Damit kann auch bei einem Einsatz der Leitungsführung nahe an ihren Auslegungsgrenzen ein Hindurchgreifen des Endes des Einschubteils durch das Aufnahmeteil und damit die dahingehende Funktionsfähigkeit der Leitungsführung sichergestellt werden.

Bevorzugt wird das Sperrelement durch eine Aufweitung des Führungselements gebildet. Dabei kann die Aufweitung ihre Sperrfunktion dadurch erfüllen, dass ihr größter Außendurchmesser größer als der kleinste Innendurchmesser des Aufnahmeteils ist.

Gemäß einer Weiterbildung der Erfindung weist das Einschubteil an mindestens einem seiner Enden ein Mündungsstück auf. Das Mündungsstück kann demnach sowohl im Inneren des ersten Elements als auch im Inneren des zweiten Elements liegen. Seine Funktion besteht im Wesentlichen darin, die Ausrichtung des Leitungsstrangs jenseits der Leitungsführung vorzugeben und damit einer Beschädigung des Leitungsstrangs zum Beispiel durch Knicken oder Abrieb an den Enden des Einschubteils vorzubeugen. Zur Erfüllung dieser Funktion kann das Mündungsstück deshalb mindestens eine Biegung aufweisen.

Gemäß der Erfindung ist das Einschubteil und das Aufnahmeteil einstückig ausgeführt. Die Leitungsführung kann demnach aus nur zwei Einzelteilen bestehen. Dabei Ist das Einschubteil beziehungsweise das Aufnahmeteil aus einem Elastomer gebildet, so kann die Montage der Leitungsführung aufgrund der hohen Elastizität des Werkstoffs durch entsprechendes Falten des Einschubteils beziehungsweise des Aufnahmeteils durchgeführt werden. Dabei ist vorgesehen, dass eines der Flanschelemente ein inneres Anlageelement und ein äußeres Anlageelement aufweist und vorzugsweise das Sperrelement durch eine Aufweitung des Führungselements gebildet wird und zur Montage durch das Aufnahmeteil hindurchgeführt werden muss.

Ein erfindungsgemäßes System umfasst eine erfindungsgemäße Leitungsführung sowie ein erstes Element und ein zweites Element, wobei es sich bei dem zweiten Element um eine Vorrichtung und bei dem ersten Element um eine Tür der Vorrichtung handeln kann. Die Vorrichtung kann dabei insbesondere durch einen Inkubator, einen Klimaschrank, einen Simulationsschrank oder ein Fahrzeug gebildet werden.

Simulationsschränke werden in wissenschaftlichen Laboren oder im industriellen Einsatz zur Erzeugung und Simulation von biologischen, chemischen und/oder physikalischen Raumbedingungen oder Umwelteinflüssen, wie beispielsweise Temperatur, Luftdruck und/oder Luftfeuchtigkeit verwendet.

Ein Ausführungsbeispiel der Erfindung wird anhand der nachfolgenden Figuren erläutert. Es zeigt:
- Figur 1: eine dreidimensionale Darstellung eines Ausführungsbeispiels einer erfindungsgemäßen Leitungsführung in einer Einbausituation,
- Figur 2: ein zweidimensionaler Längsschnitt des in Figur 1 dargestellten Ausführungsbeispiels in der in Figur 1 dargestellten Einbausituation,
- Figur 3:: eine dreidimensionale Darstellung des in Figur 1 dargestellten Ausführungsbeispiels in einer Einbausituation mit gebogenem Einschubteil aufgrund winkligen Versatzes,
- Figur 4:: eine dreidimensionale Darstellung des Einschubteils des in Figur 1 dargestellten Ausführungsbeispiels,
- Figur 5:: eine dreidimensionale Darstellung des Aufnahmeteils des in Figur 1 dargestellten Ausführungsbeispiels.

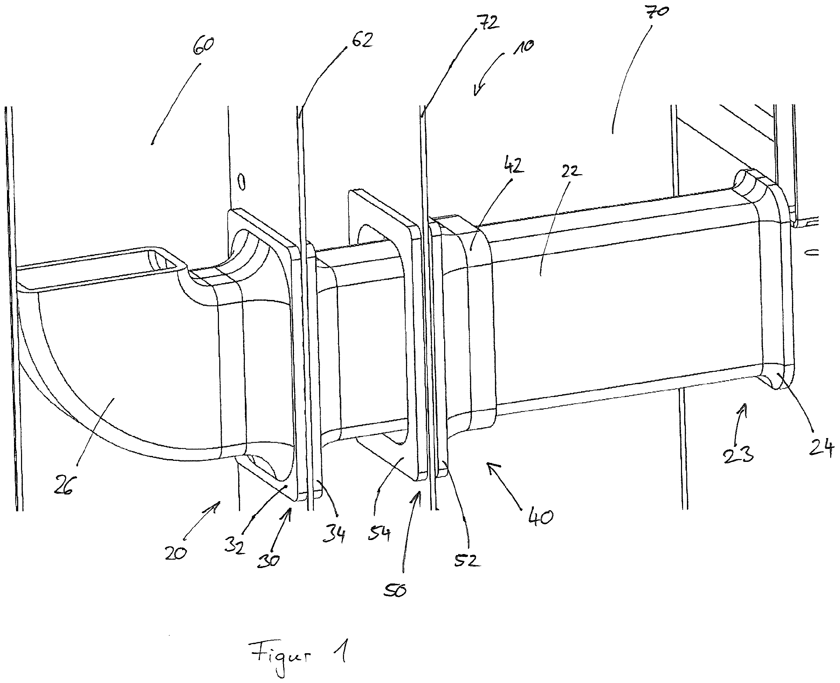

Die Figuren 1 bis 5 zeigen verschiedene Ansichten eines Ausführungsbeispiels. Der Übersichtlichkeit halber werden nicht alle Bezugszeichen in jeder Figur verwendet.

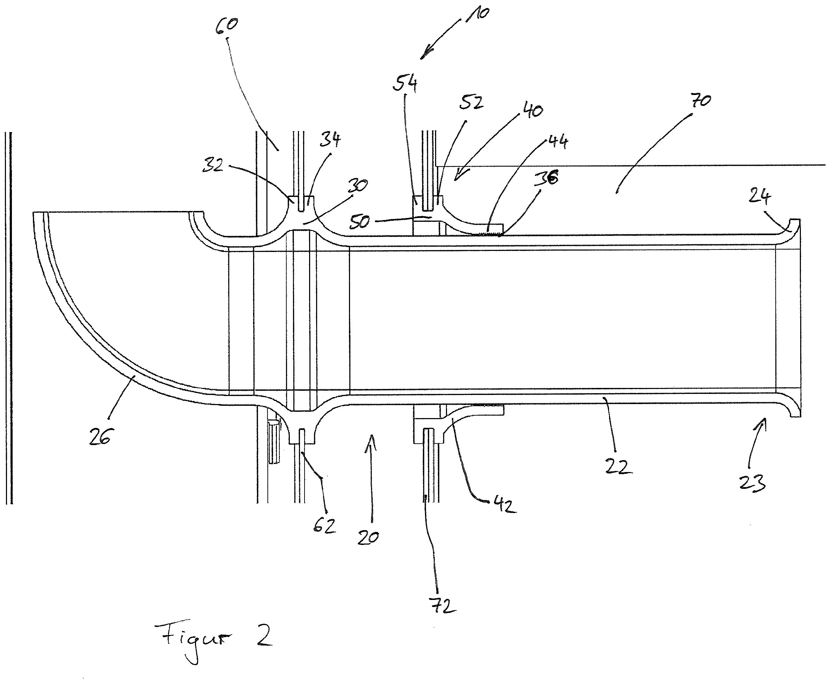

Die Figuren 1 und 2 zeigen verschiedene Ansichten eines Ausführungsbeispiels einer erfindungsgemäßen Leitungsführung 10. Zur Führung mindestens eines Leitungsstrangs zwischen einem ersten Element 60 und einem zweiten Element 70 weist die Leitungsführung 10 ein Einschubteil 20 und ein Aufnahmeteil 40 auf.

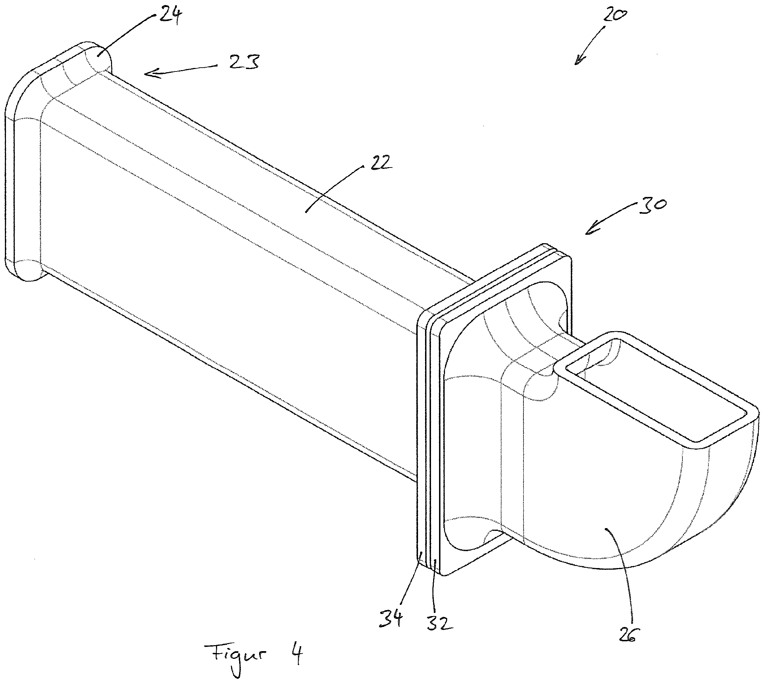

Eine Einzelansicht des Einschubteils 20 gibt Figur 4 wieder. Darin ist zu erkennen, dass das Einschubteil 20 ein rohrförmiges Führungselement 22 aufweist. Wie aus der in Figur 1 und Figur 2 dargestellten Situation deutlich wird, kann ein Ende des Führungselements 22 im eingebauten Zustand durch das Aufnahmeelement 40 hindurchgreifen und in das zweite Element 70 hineinragen. Dieses Ende des Führungselements 22 wird deshalb als hindurchgreifendes Ende 23 bezeichnet. An diesem hindurchgreifenden Ende 23 kann das Führungselement 22 ein Sperrelement 24 aufweisen. Im vorliegenden Ausführungsbeispiel wird dieses Sperrelement 24 durch eine Aufweitung des rohrförmigen Führungselements 22 gebildet. An dem dem Sperrelement 24 gegenüberliegenden Ende kann das Führungselement 22 ein Flanschelement 30 aufweisen. Vorzugsweise weist das Flanschelement 30 ein inneres Anlageelement 32 sowie ein äußeres Anlageelement 34 auf. Wie aus Figur 1 und Figur 2 ersichtlich, wird in einer bevorzugten Ausführungsform der Erfindung die Wandung 62 des ersten Elements 60 zwischen dem inneren Anlageelement 32 und dem äußeren Anlageelement 34 angeordnet.

In dem vorliegenden Ausführungsbeispiel einer erfindungsgemä-βen Leitungsführung schließt sich an das Flanschelement 30 des Einschubteils 20 ein Mündungsstück 26 an. Das Mündungsstück 26 hat insbesondere die Funktion, den Leitungsstrang entsprechend seiner Lage auszurichten und damit Beschädigungen des Leitungsstrangs beispielsweise durch Knicken oder Scheuern vorzubeugen. Zur Erfüllung dieser Funktion kann das Mündungsstück 26 eine oder mehrere Biegungen aufweisen. Wie Figur 1, Figur 2 und Figur 4 zeigen, ist im vorliegenden Ausführungsbeispiel das Mündungsstück 26 in der Einbausituation nach oben abgebogen. Außerdem ist ersichtlich, dass das Mündungsstück 26 denselben Querschnitt wie das Führungselement 22 aufweisen kann.

Das gesamte Einschubteil 20 ist im vorliegenden Ausführungsbeispiel einstückig gefertigt und besteht aus einem Elastomer, insbesondere aus Polyurethan.

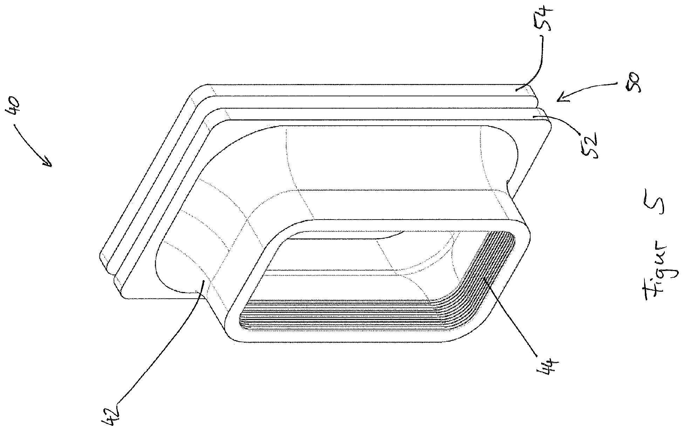

Das Aufnahmeteil 40 des vorliegenden Ausführungsbeispiels einer erfindungsgemäßen Leitungsführung 10 ist in einer Einzeldarstellung in Figur 5 gezeigt. Das Aufnahmeteil 40 kann ebenfalls ein Flanschelement 50 mit einem inneren Anlageelement 52 sowie einem äußeren Anlageelement 54 aufweisen. An das innere Anlageelement 52 des Flanschelements 50 kann sich eine Aufnahmetülle 42 anschließen. Auf ihrer Innenseite kann die Aufnahmetülle 42 zumindest abschnittsweise eine Riffelung 44 aufweisen. Das Aufnahmeteil 40 weist ebenfalls einen rohrförmigen Querschnitt auf, der in seiner Form dem rohrförmigen Querschnitt des Führungselements 22 entsprechen kann. Insbesondere ist der Innendurchmesser des Aufnahmeteils 40 auf den Außendurchmesser des Führungselements 22 abgestimmt. Im vorliegenden Ausführungsbeispiel ist das Aufnahmeteil 40 ebenso wie das Einschubteil 20 einstückig ausgeführt und besteht aus einem Elastomer, vorzugsweise Polyurethan.

Wie insbesondere aus Figur 1 und Figur 2 ersichtlich ist, kann das Flanschelement 50 des Aufnahmeteils 40, wie auch das Flanschelement 30 des Einschubteils 20, an die Wandstärke beziehungsweise die Form der Aussparung der Wandung 72 des zweiten Elements 70 angepasst sein.

Die Passung zwischen dem Flanschelement 30 des Einschubteils 20 und der Wandung 62 des ersten Elements 60 sowie die Passung zwischen dem Flanschelement 50 des Aufnahmeteils 40 und der Wandung 72 des zweiten Elements 70 können dabei so dimensioniert sein, dass an der jeweiligen Anlagefläche des jeweiligen Flanschelements 30 beziehungsweise 50 eine Dichtwirkung entsteht. Dadurch kann dem unerwünschten Austreten von Substanzen, vor allem jedoch dem unerwünschten Eintreten von Substanzen, insbesondere Schmutz, entgegengewirkt werden. Dabei können die elastischen Materialeigenschaften des verwendeten Elastomers die Dichtwirkung begünstigen.

Der Einbau des einstückig ausgeführten Einschubelements 20 in das erste Element 60 beziehungsweise des Aufnahmeteils 40 in das zweite Element 70 wird im vorliegenden Ausführungsbeispiel ebenfalls durch die elastischen Materialeigenschaften des verwendeten Elastomers ermöglicht. So können das Einschubteil 20 beziehungsweise das Aufnahmeteil 40 zur Montage zusammengefaltet, in die jeweilige Aussparung der Wandung 62 beziehungsweise der Wandung 72 eingeführt und anschließend eingepasst werden. In gleicher Weise kann das Führungselement 22 des Einschubelements 20 zur Montage zusammengefaltet und das Sperrelement 24 durch das Aufnahmeteil 40 hindurchgeführt werden. Im vollständig eingebauten Zustand ist das Führungselement 22 des Einschubteils 20 in dem Aufnahmeteil 40 axial bewegbar angeordnet.

Das Sperrelement 24 kann dabei so ausgestaltet sein, dass sein größter Außendurchmesser größer als der kleinste Innendurchmesser des Aufnahmeteils 40 ist. Damit kann bei Positionen im Bereich der maximalen Entfernung zwischen erstem Element 60 und zweitem Element 70 für die die Leitungsführung 10 dimensioniert ist, ein Herausgleiten des Führungselements 22 aus dem Aufnahmeteil 40 vermieden und damit die Funktionstüchtigkeit der Leitungsführung 10 sichergestellt werden.

Der Leitungsstrang kann in der Einbausituation im ersten Element 60 durch das Mündungsstück 26 aufgenommen, vom Führungselement 22 umgeben durch das Aufnahmeteil 40 hindurchgeführt und schließlich am hindurchgreifenden Ende 23 in das zweite Element 70 entlassen werden.

Insbesondere aus Figur 2 ist ersichtlich, dass im Einbauzustand zwischen dem Führungselement 22 und der Aufnahmetülle 42 ein am Umfang des Führungselements 22 umlaufender, flächiger Kontakt 36 ausgebildet sein kann. Insbesondere kann dieser flächige Kontakt 36 eine Dichtfunktion erfüllen, um sowohl den unerwünschten Austritt von Substanzen aus dem zweiten Element 70 als auch den unerwünschten Eintritt von Substanzen in das zweite Element 70, insbesondere Schmutz, zu vermeiden. Darüber hinaus kann die Riffelung 44, die zumindest abschnittsweise im Bereich des Kontakts 36 auf der dem Führungselement 22 zugewandten Seite des Aufnahmeteils 40 angeordnet sein kann, die Reibung zwischen Führungselement 22 und Aufnahmeteil 40 vermindern und so die axiale Bewegbarkeit des Führungselements 22 unterstützen.

Darüber hinaus ist aus Figur 2 erkennbar, dass die Leitungsführung 10 in der gezeigten Form den Raumbedarf zwischen dem ersten Element 60 und dem zweiten Element 70 minimiert, da das Führungselement 22 bei einer Annäherung von erstem Element 60 und zweitem Element 70 quasi vollständig in das zweite Element 70 eingeschoben werden kann.

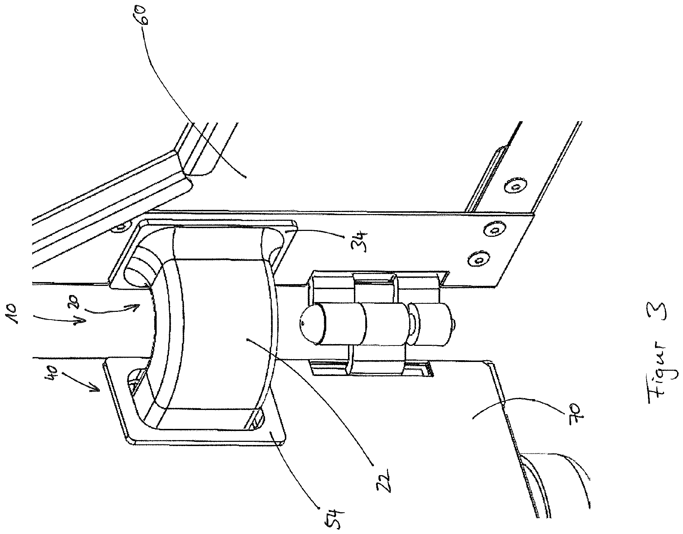

Figur 3 zeigt das Ausführungsbeispiel einer erfindungsgemäßen Leitungsführung 10 in einer weiteren Einbausituation. Dabei sind das erste Element 60 und das zweite Element 70 zueinander mit winkligem Versatz angeordnet. Bei dem zweiten Element 70 kann es sich dabei um eine Vorrichtung und bei dem ersten Element 60 um eine Tür der Vorrichtung handeln. Bedingt durch den konstruktiven Aufbau sind in dieser Einbausituation das erste Element 60 und das zweite Element 70 bei winkligem Versatz zueinander relativ bewegbar. Eine erfindungsgemäße Leitungsführung 10 kann diesen Versatz auch bei stattfindender Relativbewegung zwischen dem ersten Element 60 und dem zweiten Element 70 flexibel und vorzugsweise durch rein elastische Verformung des Führungselements 22 des Einschubteils 20 ausgleichen.

### Bezugszeichenliste

- 10: Leitungsführung
- 20: Einschubteil
- 22: Führungselement
- 23: hindurchgreifendes Ende
- 24: Sperrelement
- 26: Mündungsstück
- 30: Flanschelement
- 32: inneres Anlageelement
- 34: äußeres Anlageelement
- 36: Kontakt
- 40: Aufnahmeteil
- 42: Aufnahmetülle
- 44: Riffelung
- 50: Flanschelement
- 52: inneres Anlageelement
- 54: äußeres Anlageelement
- 60: erstes Element
- 62: Wandung
- 70: zweites Element
- 72: Wandung

## Patentansprüche

1. Leitungsführung zur Führung mindestens eines Leitungsstrangs zwischen einem ersten Element (60) und einem zweiten Element (70), mit einem Einschubteil (20), das ein rohrförmiges Führungselement (22) aufweist und an dem ersten Element (60) anordenbar ist, und einem rohrförmigen Aufnahmeteil (40), das an dem zweiten Element (70) anordenbar ist, wobei das Führungselement (22) des Einschubteils (20) in dem Aufnahmeteil (40) axial bewegbar angeordnet ist, wobei das Einschubteil (20) und das Aufnahmeteil (40) mindestens ein Flanschelement (30, 50) aufweisen, **dadurch gekennzeichnet dass** ein Flanschelement (30, 50) ein inneres Anlageelement (32, 52) und ein äußeres Anlageelement (34, 54) aufweist, wobei das Einschubteil (20) und das Aufnahmeteil (40) einstückig ausgebildet sind und aus einem Elastomer bestehen.

2. Leitungsführung nach Anspruch 1,
**dadurch gekennzeichnet, dass**
das Einschubteil (20) und/oder das Aufnahmeteil (40) zumindest abschnittsweise aus Polyurethan, besteht.

3. Leitungsführung nach einem der vorhergehenden Ansprüche,
**dadurch gekennzeichnet, dass**
das Aufnahmeteil (40) mindestens eine Aufnahmetülle (42) aufweist.

4. Leitungsführung nach Anspruchs,
**dadurch gekennzeichnet, dass**
die Aufnahmetülle (42) am inneren Anlageelement (32,52) und/oder am äußeren Anlageelement (34, 54) des Flanschelements (30, 50) angeordnet ist.

5. Leitungsführung nach einem der vorherigen Ansprüche,
**dadurch gekennzeichnet, dass** ein Innendurchmesser des Aufnahmeteils (40) und ein Außendurchmesser des Führungselements (22) in einem linienförmigen oder flächigen Kontakt (36) miteinander stehen.

6. Leitungsführung nach Anspruch 5,
**dadurch gekennzeichnet, dass**
das Aufnahmeteil (40) im Bereich des Kontakts (36) auf der dem Führungselement (22) zugewandten Seite zumindest abschnittsweise eine Riffelung (44) aufweist.

7. Leitungsführung nach einem der vorhergehenden Ansprüche,
**dadurch gekennzeichnet, dass**
das Einschubteil (20) ein durch das Aufnahmeteil (40) hindurchgreifendes Ende (23) aufweist.

8. Leitungsführung nach Anspruch 7,
**dadurch gekennzeichnet, dass**
das Einschubteil (20) am durch das Aufnahmeteil (40) hindurchgreifenden Ende (23) ein Sperrelement (24) aufweist.

9. Leitungsführung nach Anspruchs,
**dadurch gekennzeichnet, dass**
das Sperrelement (24) durch eine Aufweitung des Führungselements (22) gebildet wird.

10. Leitungsführung nach einem der vorhergehenden Ansprüche,
**dadurch gekennzeichnet, dass**
das Einschubteil (20) an mindestens einem seiner Enden ein Mündungsstück (26) aufweist.

11. Leitungsführung nach Anspruch 10,
**dadurch gekennzeichnet, dass**
das Mündungsstück (26) mindestens eine Biegung aufweist.

12. System aus einer Leitungsführung (10) nach einem der vorhergehenden Ansprüche und einem ersten Element (60) und einem zweiten Element (70),
**dadurch gekennzeichnet, dass**
es sich bei dem zweiten Element (70) um eine Vorrichtung handelt, und dass es sich bei dem ersten Element (60) um eine Tür der Vorrichtung handelt.

## Claims

1. Cable conduit for routing a cable strand between a first element (60) and a second element (70), having an insertion part (20), which comprises a tubular routing element (22) and which can be arranged on the first element (60), and a tubular receiving part (40), which can be arranged on the second element (70),
wherein the routing element (22) of the insertion part (20) is axially moveably arranged in the receiving part (40), wherein the insertion part (20) and the receiving part (40) comprise at least one flange element (30, 50)
**characterized in that** a flange element (30, 50) comprises an inner abutment element (32, 52) and an out abutment element (34, 54),
wherein the insertion part (20) and the receiving part (40) are implemented in one piece and are made of elastomer.

2. Cable conduit in accordance with claim 1
**characterized in that**
the insertion part (20) and/or the receiving part (40) are at least partially made of polyurethane.

3. Cable conduit in accordance with either of the preceding claims,
**characterized in that**
the receiving part (40) comprises at least one receiving sleeve (42).

4. Cable conduit in accordance with claim 3
**characterized in that**
the receiving sleeve (42) is arranged on the inner abutment element (32, 52) and/or on the outer abutment element (34, 54) of the flange element (30, 50).

5. Cable conduit in accordance with any of the preceding claims
**characterized in that**
an inner diameter of the receiving part (40) and an outer diameter of the routing element (22) are in a linear or flat contact (36) with each other.

6. Cable conduit in accordance with claim 5,
**characterized in that**
the receiving part (40) comprises, at least partially, on the side facing the routing element (22), in the region of the contact (36), a ribbing.

7. Cable conduit in accordance with any of the preceding claims,
**characterized in that**
the insertion part (20) comprises an end (23) which engages through the receiving part (40).

8. Cable conduit in accordance with any of the preceding claims,
**characterized in that**
the insertion part (20) comprises a blocking element (24) on the end (23) which engages through the receiving part (40).

9. Cable conduit in accordance with claim 8,
**characterized in that** the blocking element (24) is formed by a widening of the routing element (22).

10. Cable conduit in accordance with any of the preceding claims,
**characterized in that**
the insertion part (20) comprises, at at least one of its ends, a neck part (26).

11. Cable conduit in accordance with any of the preceding claims,
**characterized in that** the neck part (26) comprises at least one curvature.

12. System consisting of a cable conduit (10) in accordance with any of the preceding claims and having a first element (60) and a second element (70),
**characterized in that**
the second element (70) is an installation and **in that** the first element (60) is a door of the installation.

## Revendications

1. Guidage de conduite pour guider au moins un faisceau de conduites entre un premier élément (60) et un second élément (70) comprenant une pièce à emmancher (20) munie d'un élément de guidage tubulaire (22) et fixée au premier élément (60) ainsi qu'une pièce réceptrice tubulaire (40) sur le deuxième élément (70),
- l'élément de guidage (22) de la pièce emmanchée (20) est mobile axialement dans la pièce réceptrice (40),
- la pièce emmanchée (20) et la pièce réceptrice (40) ont au moins un élément de bride (30, 50),
guidage de conduite **caractérisé en ce que**
un élément de bride (30, 50) comporte un élément d'appui intérieur (32, 52) et un élément d'appui extérieur (34, 54),
- la pièce à emmancher (20) et la pièce réceptrice (40) sont réalisées en une seule pièce et en un élastomère.

2. Guidage de conduite selon la revendication 1,
**caractérisé en ce que**
la pièce à emmancher (20) et/ou la pièce réceptrice (40) sont au moins par segments en polyuréthane.

3. Guidage de conduite selon l'une des revendications précédentes,
**caractérisé en ce que**
la pièce réceptrice (40) a au moins un manchon récepteur (42).

4. Guidage de conduite selon la revendication 3,
**caractérisé en ce que**
le manchon récepteur (42) est prévu sur l'élément d'appui intérieur (32, 52) et/ou sur l'élément d'appui extérieur (34, 54) de l'élément de bride (30, 50).

5. Guidage de conduite selon l'une des revendications précédentes,
**caractérisé en ce que**
le diamètre intérieur de la pièce réceptrice (40) et le diamètre extérieur de l'élément de guidage (22) sont en contact l'un avec l'autre par un contact linéaire ou surfacique (36).

6. Guidage de conduite selon la revendication 5,
**caractérisé en ce que**
Dans la zone du contact (36), la pièce réceptrice (40) comporte au moins par segment un moletage (44) sur le côté tourné vers l'élément de guidage (22)

7. Guidage de conduite selon l'une des revendications précédentes,
**caractérisé en ce que**
la pièce à emmancher (20) a une extrémité (23) traversant la pièce réceptrice (40).

8. Guidage de conduite selon la revendication 7,
**caractérisé en ce que**
la pièce à emmancher (20) comporte un élément de blocage (24) à l'extrémité (23) traversant la pièce réceptrice (40).

9. Guidage de conduite selon la revendication 8,
**caractérisé en ce que**
l'élément de blocage (24) est formé par un évasement de l'élément de guidage (22).

10. Guidage de conduite selon l'une des revendications précédentes,
**caractérisé en ce que**
la pièce à emmancher (20) a un embout (26) au moins à l'une de ses extrémités.

11. Guidage de conduite selon la revendication 10,
**caractérisé en ce que**
l'embout (26) comporte au moins un coude.

12. Système composé d'un guidage de conduites (10) selon l'une des revendications précédentes et un premier élément (60) ainsi qu'un second élément (70),
système **caractérisé en ce que**
le deuxième élément (70) est un dispositif et le premier élément (60) est une porte du dispositif.
